Europäisches Patentamt

(19) **European Patent Office**

Office européen des brevets

(11) Publication number: **0 105 300**
**B1**

(12) **EUROPEAN PATENT SPECIFICATION**

(45) Date of publication of patent specification: **17.09.86**

(51) Int. Cl.⁴: **A 01 D 90/00**

(21) Application number: **83901120.2**

(22) Date of filing: **28.03.83**

(86) International application number:
**PCT/SE83/00116**

(87) International publication number:
**WO 83/03332 13.10.83 Gazette 83/24**

(54) SELF-LOADING CARRIAGE FOR ROUND BALES.

(30) Priority: **29.03.82 SE 8201966**
**22.03.83 SE 8301568**

(43) Date of publication of application:
**18.04.84 Bulletin 84/16**

(45) Publication of the grant of the patent:
**17.09.86 Bulletin 86/38**

(84) Designated Contracting States:
**AT BE CH DE FR GB LI NL SE**

(56) References cited:
**CA-A-1 073 218**
**DE-A-2 536 756**
**FR-A-2 233 922**
**FR-A-2 373 224**
**FR-A-2 445 100**
**US-A-4 282 969**

(73) Proprietor: **ANSBJER, Jan**
**Skogsvillan**
**S-464 00 Nossebro (SE)**

(72) Inventor: **ANSBJER, Jan**
**Skogsvillan**
**S-464 00 Nossebro (SE)**

(74) Representative: **Axelsson, Rolf et al**
**Kransell & Wennborg AB Sandhamnsgatan 42**
**S-115 28 Stockholm (SE)**

Courier Press, Leamington Spa, England.

## Description

It has lately become common practice to pack hay, straw etc. in the form of round, or cylindrical, bales since these, as is known to the expert, offer many advantages.

A critical stage in the handling of round bales is the collection thereof from the field for conveying them to a place of storage or use. Special implements have been designed for such collection and conveyance. All hitherto known implements of this kind above all are characterized in that they are very heavy, complicated, unwieldly and costly. One example of such a previously known round bale collection and conveying device is shown by CA—A—1 073 218. The bale carrier according to this specification can be pulled by a tractor and has a side loading device which lifts the bales from the ground and onto the carrier. The bales are then moved rearwardly along the carrier, supported by frame members thereof, by means of a pusher driven by endless chains. This design is very complicated and requires robust and costly dimensioning. Neither the loading or unloading are as efficient as could be desired.

The invention therefor has for its purpose a self-loading round bale carriage which is of low weight, of simple design and hence inexpensive and which also shall permit of a manoeuvrability simplified to such extent that the carriage can be completely controlled by a person sitting on the tractor. These purposes are attained through the round bale carriage according to the claims.

An embodiment of the invention is described in detail below with reference to the attached drawing, wherein

Fig. 1 is a view from above of a round bale carriage according to the invention, and

Fig. 2 is a rear view of the carriage.

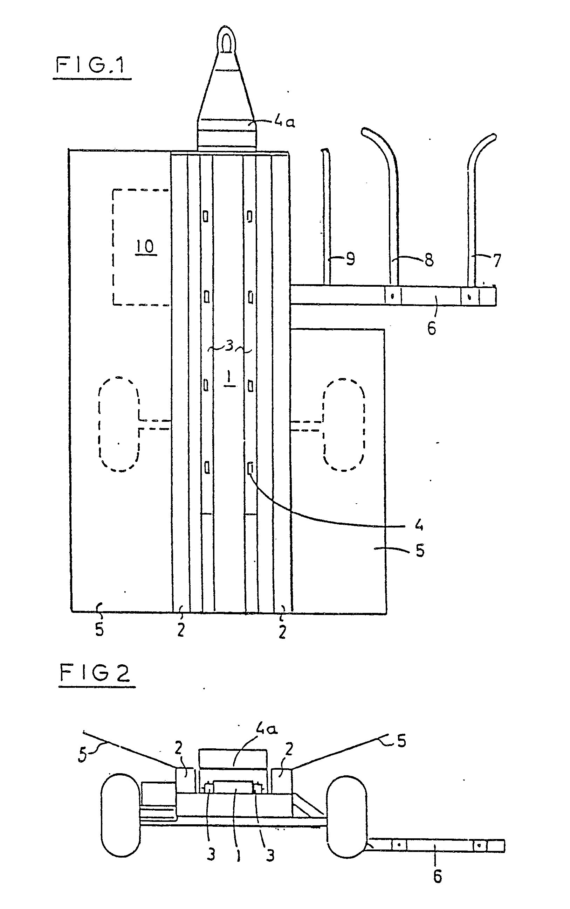

The round bale carriage according to the invention shown has two wheels and, as indicated in Fig. 1, devices for coupling it to a tractor. When the carriage is coupled to a tractor it is also connected to the hydraulic take-off.

The carriage essentially consists of a frame the main member of which is a channel element 1 extending generally along the longitudinal centre line of the carriage and the flanges of which extend downwardly, the web thereof constituting a substantial portion of the bottom of the carriage. The frame is completed by lateral section elements 2 and end members only sketchily indicated in the Figures and which may consist of section elements or plates. Between lateral section elements 2 and centre channel element 1 there are provided two section elements 3, for instance in the form of tubes of preferably square cross-section and mounted so as to be reciprocatingly drivable by means of pistons driven by the hydraulic system of the tractor. The travel preferably is about one meter. They are provided with apertures 4 distributed along their length. Inside each one of these apertures a wedge (not shown) is movably mounted such that adjacent its inner end it is pivoted and so as to project somewhat with its outer end from the aperture, the wedge also adjacent its outer end resting with its rear side against the rear edge of aperture 4. The wedge consists of an elongated rectangular metal rod the outer end of which is bevelled on the side facing the rear end of the carriage such that it terminates with a rather narrow edge.

The top surface of centre channel element 1 is a few centimeters above the level of the two movable elements 3 and is to support the round bales to be conveyed by the carriage. Furthermore, movable section elements 3 are joined at their forward ends by a transverse member 4a, preferably of plate steel and having a portion which is somewhat above movable section elements 3 and which is upwardly inclined at an angle of preferably about 45°. Member 4a hence reciprocates with the movable section elements. Upon a round bale, by means of a mechanism to be described below, having been hoisted up on the carriage and positioned thereon with one of its ends adjacent member 4a the operator causes movable section elements 3 and consequently member 4a to make first one and then as a rule additionally about one half stroke, to move the bale rearward and provide sufficient room for the next bale to be loaded. The bale rests on the top face of center frame member 1 with its sides projecting over reciprocating members 3. However, members 3 having their top faces in a plane somewhat below the top face of center frame member 1 will not contribute to the pushing of the bale rearward. If this were not so, reciprocating members 3 would tend to move the loaded bales counter to the bale feed direction, i.e. forward on the carriage when making their forward, or return, stroke. Hence, the first bale loaded on the carriage initially will be pushed rearward by element 4a only. By making movable section elements 3 carry out one and about one half stroke as mentioned, the operator thus will first push the bale about one bale length backwards on the carriage since element 4a will push the bale backwards one stroke length. When the operator makes the additional half stroke or so he will not be helped by element 4a in moving the bale further, since element 4a does not move rearward any further than what corresponds to one stroke length. However, the wedges, in their inactive positions protrude somewhat above the top faces of reciprocating members 3. The amount by which they protrude and the height of the top faces of reciprocating members 3 are selected to be such with respect to the height of the top face of center frame member 1 that the wedges have their rear end top corners in contact with the portions of a bale overlaying reciprocating members 3. This being the case, as the reciprocating members 3 move under the bale, taking with them the wedges, the wedges will engage the material constituting the bottom surface of the bale, rotate about their privots, and pivot out of their apertures 4 until stopped in a more or less vertical position by the forward edges of apertures 4. In such vertical position, the wedges project into the material of the bale and slightly raise the bale to ease the pressure of the bale against the top face of center frame member 1 and reduce the friction thereagainst. It will be apparent that the wedges push the bale rearward as the wedges are moved by members 3.

Hence, in this manner the operator can move a bale backwards on the carriage a sufficient amount to make room for the next bale to be loaded. Of course, the length of the stroke could be arranged to be large enough to permit the bales to be pushed by pusher 4a far enough backwards on the carriage to make room for a subsequent bale. However, this would considerably increase the cost of the carriage since this would call for both a larger cylinder-piston assembly and a longer carriage. It is not possible to dispense with the wedges to transport the bales along the carriage using only a longer piston stroke and element 4a for pushing the first bale by its first increment along the carriage, and bales loaded subsequently for pushing the first loaded bales along the carriage, since such an arrangement would not allow the carriage to be unloaded.

In moving the first bale rearward a first increment along the carriage, the operator need not be especially careful, within reason, in choosing the length of such increment to make room for the next bale to be loaded. If a bale is not pushed rearward on the carriage a full bale length, then the operator may place the next bale with its forward end resting more or less far up the inclined portion of element 4a; that is, far up enough for the bale to be placed forwardly of the bale first positioned on the carriage. If, on the other hand, the first bale is moved rearward on the carriage somewhat further than a bale length, then, of course, there will be ample room for the next bale. This would seem to be quite disadvantageous, since loading the carriage with spaces between the bales would mean a severely reduced loading capacity of the carriage. However, when the second bale is being pushed rearward on the carriage by the operator actuating the piston, the first bale is initially not moved at all since it is resting on the top face of immobile center frame member 1 and the top faces of reciprocating members 3 are not in contact with the bottom surface of the bale with enough pressure to exert any motive force on the bale. In addition, the wedges which previously had been raised to project into the bale to act as drivers therefore are withdrawn from the bale and rotated about their pivots to return to their inactive position; i.e., resting with their bevelled end faces against the backward edges of apertures 4, during the return stroke of reciprocating members 3 and element 4a in preparation for receiving the next bale. However, when the feeding motion is initiated, after a short initial rearward movement of reciprocating members 3, with the bale resting immobile on center frame member 1, the wedges again will pivot to engage the material constituting the bottom surface of the bales and will be raised to thereupon act as drivers for the bale. But it will take some time for the wedges to engage the bale by pivoting to their more or less vertical, active positions; i.e. it will take a certain portion of the length of the stroke for the wedges to assume such vertical positions. On the other hand, the second bale will be set in motion immediately as the stroke is initiated by element 4a. Hence, the second bale will overtake the bale loaded before it to close the initially existing space between them. Thereby the bales will be loaded in the carriage in mutual contact, and much space will be conserved.

Both the fact that the operator need not position a bale being loaded with any precision on the carriage, and the fact that the arrangement feeding the bales rearward on the carriage will automatically eliminate any spaces between the bales as loaded, are very advantageous. The first circumstance saves much time in the field, and the second circumstance conserves considerable loading space on the carriage which means that the carriage can be made substantially shorter than would otherwise have been required. This is an advantage per se but also means that the carriage can be made from section elements of standard lengths and still have a length sufficient for a suitable number of bales. This, of course, means considerable cost savings.

Lateral section elements 2 are dimensioned and mounted such that with their top surfaces they project somewhat above the level of the top surface of centre section element 1. They thereby keep the bales in position and guide these as they are moved rearwardly on the carriage. To additionally make sure that the bales are retained on the carriage there are preferably provided preferably detachable lateral members 5 extending along the carriage and somewhat inclined upwardly therefrom. These may also function as mud flaps and therefor preferably consist of metal plates. They are shown as plane plates in Fig. 2 but are preferably arched transversely. Lateral members 5 are especially of importance during transport of a loaded carriage.

The piston by means of which movable section elements 3 are caused to reciprocate preferably is placed at the rear end of and below the carriage so as to act on a member joining movable section elements 3 so that these are pulled rather than pushed whereby the guiding and reliability of the feeding motion is improved.

As is evident from Fig. 1 one of members 5 does not extend as far as to the forward end of the carriage but is shortened to give room for a bale loading mechanism and to permit loading of bales by means of the bale loading mechanism.

The bale loading mechanism consists of a rocker arm 6 actuable by a hydraulically driven piston and pivoted adjacent the forward end of the carriage. Rocker arm 6 is rockable from a position wherein it is adjacent the ground and to a position wherein it is more or less vertical. Of course, and as is evident from Fig. 1, the pivot axis is parallel with the longitudinal axis of the carriage and rocker arm 6 is substantially normal thereto.

The rocker arm carries three bale catching section elements, here designated spears 7, 8, 9, which project forwardly from the rocker arm. Of these, one spear 7 is located adjacent the outer end of the rocker arm, a second spear 8 near the middle of the arm and a third spear 9 near the inner end of the arm. The two outermost spears 7 and 8 are curved outwardly and inwardly, respectively at their outer ends in a plane which is substantially horizontal when rocker arm 6 is in the down position. Thereby these spears are prevented from digging into the ground when the carriage is moved forwardly. Also, the two outermost spears are preferably adjustable along rocker arm 6 to permit adaption to different bale sizes. Third spear 9, in the position of the rocker arm just mentioned, is angled somewhat upwardly and inwardly which facilitates roll off from the bale loading mechanism of a bale catched by the spears when rocker arm 6 during hoisting the bale approaches its vertical position. Also, thereby the bale is inclined such that the placement thereof forwardly of an already loaded bale is facilitated when the latter bale is located such that it does not leave space between pusher member 4a and its forward end completely corresponding to a bale length. In this situation the forwardly-upwardly inclined portion of member 4a described above facilitates placing the bale being loaded on centre channel element 1 since obviously it can now function as a sliding surface for the forward edge of the bale.

A possible variation of the embodiment described above is constituted by a replacement of the two reciprocating section elements 3 by a single such element, in such case preferably recessed in centre channel element 1 or located between two channel elements 1 extending on either side of the longitudinal centre line of the carriage.

The piston by means of which the rocker arm is actuated preferably is of the single-acting type so as not to counteract the minor movements upwardly and downwardly that the rocker arm has to carry out as the carriage is moved over more or less uneven ground.

Preferably a detachable counterweight 10 is placed opposite rocker arm 6, preferably inside the carriage wheel on the counterweight side.

Obviously, the carriage may be unloaded by the bale feeding movements described above.

**Claims**

1. A self-loading carriage for round bales adapted to be coupled to a tractor and to be operated via the hydraulic take-off thereof, the carriage frame being constructed from section elements of which at least one (1) extends along the longitudinal centre line of the carriage and which offer a supporting sliding surface for round bales hoisted from the ground and loaded on the carriage, with their axes substantially parallel with the longitudinal axis of the carriage, by a hoisting device (6—9) located at the forward end of the carriage with respect to the intended driving-direction thereof and at one side of the carriage and operated from the hydraulic take-off of the tractor, characterized by at least one reciprocatable section element (3) extending a substantial portion of the length of the carriage adjacent said bale supporting sliding surface and reciprocatable in the longitudinal direction of the carriage to convey the round bales rearwardly on the carriage by means of a pusher (4a) associated with the forward end or ends of the reciprocatable section element or elements as well as by means of drivers consisting of self-rising wedges pivoted adjacent one of their ends at pivot points located at the bottom of the reciprocatable section element or elements and projecting with their free ends to such extent from elongated apertures (4) in the reciprocatable section element or elements that said free ends are in contact with bales resting on said bale supporting sliding surface, said apertures having a rearward edge against which the wedges proximate the rear ends thereof rest in an initial position, and a forward edge providing a stop for the wedges in a more or less vertical position thereof after they have been risen from the initial position during the rearward stroke of the reciprocatable section element or elements and as a consequence of the engagement of the wedges with bales resting on said bale supporting sliding surface, so that the drivers will actuate the bales with a delay with respect to the actuation of the bales by the pusher.

2. The round bale carriage of claim 1, characterized in that said bale supporting sliding surface is provided by the web of one U-section element (1) extending along the longitudinal centre line of the carriage, the flanges of the U-section element extending downwardly.

3. The round bale carriage of claim 2, characterized by two reciprocatable section elements (3) provided on each its side of the U-section element (1).

4. The round bale carriage of any preceding claim, characterized in that each reciprocatable section element (3) has its top surface somewhat below the level of said bale supporting sliding surface.

5. The round bale carriage of any preceding claim, characterized in that the pusher (4a) consists of a transverse plate having a top portion inclined upwardly-forwardly, preferably at an angle of about 45° to the horizontal plane.

6. The round bale carriage of any one of claims 1, 2, 4 and 5, characterized by a single reciprocatable section element (3) which is either provided between two section elements (1) providing said bale supporting sliding surface, or is recessed in one such element.

7. The round bale carriage of any preceding claim, characterized in that the carriage frame comprises two longitudinal lateral section elements (2) extending the length of each carriage side with the top faces thereof at such level as to support and guide bales conveyed along the carriage.

8. The round bale carriage of any preceding claim, characterized by upwardly-outwardly angled, plane or transversly arched, detachable lateral members (5) extending along the sides of the carriage and preferably made of plate steel, one of said lateral members being shortened at the forward end thereof to make room for the hoisting device (6—9) and to permit loading of bales.

9. The round bale carriage of any preceding claim, characterized in that the hoisting device consists of a rocker arm (6) mounted proximate the forward end of the carriage and at one side thereof and operated preferably by means of a single-acting piston, said rocker arm being rockable from a position adjacent the ground and to a substantially vertical position and projecting substantially at right angles from the side of the carriage and attached to the latter by a pivot shaft parallel with the longitudinal direction of the carriage, said rocker arm carrying at least three long and narrow bale-catching members projecting forwardly, viz. an inner bale-catching member (9) which in the horizontal position of the rocker arm preferably is inclined somewhat inwardly towards the carriage and upwardly, and two outer bale-catching members (7, 8), which preferably are movable along the rocker arm and lockable in optional positions therealong, the outer ends of the outer bale-catching members preferably being curved in a plane which in the horizontal position of the rocker arm is substantially parallel with the horizontal plane, said outer bale-catching member outer ends also preferably being somewhat curved upwardly from this plane.

10. The round bale carriage of any preceding claim, characterized in that the hoisting device (6—9) is counter-balanced by means of a preferably detachable counterweight (10) preferably located inside the carriage wheel on the counterweight side.

**Patentansprüche**

1. Selbstladender Wagen, der zum Transport von runden Ballen dient und an einen Traktor ankuppelbar und über dessen Hydraulik betätigbar ist, wobei der Rahmen des Wagens aus Profilen besteht, von denen sich mindestens eines (1) längs der Längsmittellinie des Wagens erstreckt und die eine Auflager- und Gleitfläche für runde Ballen bilden, die von dem Boden gehoben und derart auf den Wagen geladen worden sind, daß die Achsen der Ballen zu der Längsachse des Wagens im wesentlichen parallel sind, und wobei auf einer Seite des Wagens an seinem in der beabsichtigen Fahrtrichtung vorderen Ende ein Hebezeug (6 bis 9) angeordnet ist, das von der Hydraulik des Traktors betätigbar ist, gekennzeichnet durch mindestens ein hin- und herbewegbares Profil (3), das sich im Bereich der Auflager- und Gleitfläche für die Ballen über einen beträchtlichen Teil der Länge des Wagens erstreckt und in dessen Längsrichtung derart hin- und herbewegbar ist, daß die runden Ballen auf dem Wagen rückwärtsgeschoben werden, und zwar mittels eines Schiebers (4a), der dem vorderen Ende des hin- und herbewegbaren Profilteils bzw. den vorderen Enden der hin- und herbewegbaren Profile zugeornet ist und mit Hilfe von Mitnehmern, die aus selbsthebenden Keilen bestehen, die im Bereich eines ihrer Enden an Schwenklagerungen schwenkbar gelagert sind, die an der Unterseite des hin- bzw. der hin- und herbewegbaren Profile angeordnet sind, wobei die freien Enden dieser Keile von Langlöchern (4) des oder der hin- und herbewegbaren Profile so weit vorstehen, daß diese freien Enden an auf der Auflager- und Gleitfläche für die Ballen liegenden Ballen angreifen, und diese Langlöcher eine einen hinteren Rand haben, an dem in einer Ausgangsstellung der Keile diese im Bereich ihrer hinteren Enden angreifen, und einen vorderen Rand, der einen Anschlag für die Keile bildet, wenn diese sich während des Rückwärtshubes des bzw. der hin- und hergehenden Profile und infolge des Angriffs der Keile an auf der Auflager- und Gleitfläche für die Ballen ruhenden Ballen aus ihrer Ausgangsstellung in eine mehr oder weniger vertikale Stellung bewegt haben, so daß die Mitnehmer die Ballen verschieben, nachdem sie durch den Stößel verschoben worden sind.

2. Rundballenwagen nach Anspruch 1, dadurch gekennzeichnet, daß die Auflager- und Gleitfläche für die Ballen von dem Steg eines U-Profils (1) gebildet wird, das sich längs der Längsmittellinie des Wagens erstreckt und dessen Schenkel abwärtsgerichtet sind.

3. Rundballenwagen nach Anspruch 2, dadurch gekennzeichnet, daß auf beiden Seiten des U-Profils (1) je ein hin- und herbewegbares Profil (3) vorgesehen ist.

4. Rundballenwagen nach einem der vorhergehenden Ansprüche, dadurch gekennzeichnet, daß die obere Fläche je- des hin und hergehenden Profils (3) etwas unterhalb des Niveaus der Auflager- und Gleitfläche für die Ballen angeordnet ist.

5. Rundballenwagen nach einem der vorhergehenden Ansprüche, dadurch gekennzeichnet, daß der Schiebar (4a) aus einer Querplatte mit einem vorzugsweise unter einem Winkel von etwa 45° zu der Horizontalebene aufwärts und vorwärts geneigten, oberen Teil besteht.

6. Rundballenwagen nach einem der Ansprüche 1, 2, 4 und 5, gekennzeichnet durch ein einziges hin- und herbewegbares Profil (3), des entweder zwischen zwei die Auflager- und Gleitfläche für die Ballen bildenden Profilen (1) oder in einer Vertiefung eines derartigen Profils angeordnet ist.

7. Rundballenwagen nach einem der vorhergehenden Ansprüche, dadurch gekennzeichnet, daß der Rahmen des Wagens zwei seitlich angeordnete Längsprofile (2) besitzt, die sich auf je einer Seite des Wagens über deren Länge erstrecken und deren obere Flächen auf einem solchen Niveau angeordnet sind, daß sie längs des Wagens geförderte Ballen abstützen und führen.

8. Rundballenwagen nach einem der vorhergehenden Ansprüche, gekennzeichnet durch lösbar angebrachte, ebene oder in der Querrichtung gewölbte Seitenteile (5), die sich schräg aufwärts und auswärts und längs der Seiten des Wagens erstrecken und vorzugsweise aus Stahl-Grobblech bestehen, wobei der eine dieser Seitenteile an seinem vorderen Ende derart verkürzt ist, daß Platz für das Hebezeug (6 bis 9) und für das Laden von Ballen vorhanden ist.

9. Rundballenwagen nach einem der vorhergehenden Ansprüche dadurch gekennzeichnet, daß das Hebezeug aus einer Schwinge (6) besteht, die auf der einen Seite des Wagens im Bereich des vorderen Endes desselben montiert ist, vorzugsweise durch einen einfachwirkenden Kolben betätigt wird, aus einer Stellung im Bereich des Bodens in eine im wesentlichen vertikale Stellung schwenkbar ist und von einer Seite des Wagens im wesentlichen rechtwinklig vorsteht und an diesem mit einer zu der Längsrichtung des Wagens parallelen Schwenkachse montiert ist, wobei die Schwinge mindestens drei vorwärts vorstehende, lange, schmale Ballenauffangglieder trägt, und zwar eine inneres Ballenauffangglied (9), das in der horizontalen Stellung der Schwinge vorzugsweise etwas zu dem Wagen hin einwärts und aufwärts geneigt ist, und zwei äußere Ballenauffangglieder (7, 8), die vorzugsweise längs der Schwinge bewegbar und in einer gewünschten Stellung längs derselben feststellbar sind, die äußeren Enden der äußeren Ballenauffangglieder vorzugsweise in einer Ebene gekrümmt sind, die bei horizontaler Schwinge zu der Horizontalebene im wesentlichen parallel ist, und die äußeren Enden des äußeren Ballenauffanggliedes ebenfalls von dieser Ebene etwas aufwärtsgekrümmt sind.

10. Rundballenwagen nach einem der vorhergehenden Ansprüche, dadurch gekennzeichnet, daß das Hebezeug (6 bis 9) zum Gewichtsausgleich mit einem vorzugsweise abnehmbaren Gegengewicht (10) versehen ist, das vorzugsweise einwärts von dem auf derselben Seite wie das Gegengewicht vorgesehenen Wagenrad angeordnet ist.

## Revendications

1. Remorque auto-chargeable pour des balles cylindriques, adaptée pour être accouplée à un tracteur et pour être actionée par la prise hydraulique de celui-ci, le bâti de la remorque étant réalisé en plusieurs éléments dont au moins un (1) s'étend le long de l'axe longitudinal de la remorque et qui possèdent une surface de support et de glissement pour des balles cylindriques levées à partir du sol et chargées sur la remorque, leurs axes étant à peu près parallèle à l'axe longitudinal de la remorque, au moyen d'un dispositif de levage (6—9) situé à l'extrémité avant de la remorque selon le sens de la marche de celle-ci et sur un côté de la remorque, et actionné à partir de la prise hydraulique du tracteur, caractérisée en ce qu'elle comprend au moins un élément (3) pouvant avoir un mouvement de va et vient, qui s'étend sur une partie importante de la longueur de la remorque, au voisinage de la dite surface de support et de glissement des balles, et qui peut se déplacer suivant un mouvement de va et vient selon la direction longitudinale de la remorque afin de transporter les balles cylindriques vers l'arrière de la remorque au moyen d'un poussoir (4a) associé à l'extrémité, ou aux extrémités, avant du ou des éléments pouvant avoir un mouvement de va et vient, ainsi qu'au moyen d'organes d'entraînement consistant en des coins auto-relevables articulés au voisinage d'une de leurs extrémités en des points d'articulation situés à la partie basse du ou des éléments pouvant avoir un mouvement de va et vient et dont les extrémités libres font saillie dans les ouvertures allongées (4) du où des éléments pouvant avoir un mouvement de va et vient, sur une distance telle que les dites extrémités libres soient en contact avec les balles reposant sur ladite surface de support et de glissement, lesdites ouvertures ayant un bord arrière contre lequel les coins adjacents s'appuient, en position initiale, par des zones proches de leurs extrémités arrière, et un bord avant constituant une butée pour les coins lorsqu'ils sont dans une position plus ou moins verticale après qu'ils aient été soulevés à partir de leur position initiale durant la course vers l'arrière de l'élément ou des éléments pouvant avoir un mouvement de va et vient et à la suite de la venue en contact des coins avec les balles reposant sur ladite surface de support et de glissement des balles, de sorte que les organes d'entraînement agissent sur les balles avec un retard par rapport à l'actionnement des balles par le poussoir.

2. Remorque pour balles cylindriques selon la revendication 1, caractérisée en ce que ladite surface de support et de glissement est constituée par l'âme d'une élément (1) à section en U s'étendant le long de l'axe longitudinal de la remorque, les ailes de l'élément à section en U étant dirigés vers le bas.

3. Remorque pour balles cylindriques selon la revendication 2, caractérisée en ce qu'elle comprend deux éléments (3) pouvant avoir un mouvement de va et vient, disposés de part et d'autre de l'élément (1) à section en U.

4. Remorque pour balles cylindriques selon l'une quelconque des revendications précédentes, caractérisée en ce que chaque élément (3) pouvant avoir un mouvement de va et vient, a sa surface supérieure quelque peu en dessous du niveau de ladite surface de support et de glissement des balles.

5. Remorque pour balles cylindriques selon l'une quelconque des revendications précédentes, caractérisée en ce que le poussoir (4a) est constitué d'une plaque transversale ayant une partie supérieure inclinée vers le haut et vers l'avant en formant avec un plan horizontal un angle de préférence voisin de 45°.

6. Remorque pour balles cylindriques selon l'une quelconque des revendications 1, 2, 4 et 5, caractérisée en ce qu'elle comporte un seul élément (3) pouvant avoir un mouvement de va et

vient, celui-ci étant soit disposé entre deux éléments (1) fournissant ladite surface de support et de glissement, soit logé dans un seul élément de ce type.

7. Remorque pour balles cylindriques selon l'une quelconque des revendications précédentes, caractérisée en ce que le bâti de la remorque comprend deux éléments latéraux longitudinaux (2) s'étendant le long de chaque côté de la remorque et dont les faces supérieures sont situées à un niveau tel qu'elles supportent et guident les balles convoyées le long de la remorque.

8. Remorque pour balles cylindriques selon l'une quelconque des revendications précédentes, caractérisée en ce qu'elle comporte des organes latéraux amovibles (5), inclinés vers le haut et l'extérieur, plans ou incurvés transversalement, qui s'étendent le long des côtés de la remorque et sont de préférence réalisés sous forme de plaques d'acier l'un desdits organes latéraux étant raccourci à son extrémité avant pour ménager de la place pour le dispositif de levage (6—9) et permettre le chargement des balles.

9. Remorque pour balles cylindriques selon l'une quelconque des revendications précédentes, caractérisée en ce que le dispositif de levage est constitué par un bras basculant (6), monté au voisinage de l'extrémité avant de la remorque et sur l'un des côtés de celle-ci, et actionné de préférenc au moyen d'un vérin simple effet, ce bras basculant pouvant basculer d'une position voisine du sol à une position à peu près verticale et faisant saillie à peu près à angles droits par rapport au côté de la remorque et étant relié à cette dernière par un arbre d'articulation parallèle à la direction longitudinale de la remorque, ce bras basculant portant au moins trois organes long et étroits de saisie des balles, dirigés vers l'avant, à savoir, un organe intérieur (9) de saisie des balles qui, en position horizontale du bras basculant est de préférence incliné quelque peu vers l'intérieur de la remorque et vers le haut, et deux organes extérieurs (7, 8) de saisie des balles qui sont de préférence mobiles le long du bras et peuvent être bloqués dans des positions choisies le long de celui-ci, les extrémités extérieures des organes extérieurs de saisie des balles étant de préférence incurvées dans un plan qui, en position horizontale du bras, est à peu près parallèle au plan horizontal, lesdites extrémités extérieures des organes extérieurs de saisie des balles étant également de préférence incurvées vers le haut à partir de ce plan.

10. Remorque pour balles cylindriques selon l'une quelconque des revendications précédentes, caractérisé en ce que le dispositif de levage (6—9) est équilibré au moyen d'un contrepoids (10) de préférence amovible, et de préférence situé à l'intérieur de la roue de la remorque située an côté du contrepoids.

FIG.1

FIG 2